# EUROPEAN PATENT SPECIFICATION

(11) **EP 0 724 950 B1**
(45) Date of publication and mention of the grant of the patent: **19.04.2000**
(21) Application number: 95200137.8
(22) Date of filing: 20.01.1995
(51) Int. Cl.: B29C 71/02

(54) **Process for the annealing of objects out of thermoplastic materials**
Verfahren zum Temperen von thermoplastischen Gegenständen
Procédé pour recuire des objets en matière thermoplastique

(43) Date of publication of application: 07.08.1996
(73) Proprietor: GENERAL ELECTRIC COMPANY, Schenectady, NY 12345 (US)
(72) Inventor: van Damme, Petrus André Marie, NL-4600 AC Bergen op Zoom (NL); Groothuis, Adelbert Hermannus Leonardus, NL-4600 AC Bergen op Zoom (NL); Hendriks, Lucas Johannes Catharina, NL-4600 AC Bergen op Zoom (NL)
(74) Representative: Grever, Frederik

(56) References cited:
- DE-A- 1 479 157
- DE-A- 2 103 313
- DE-A- 3 905 412
- FR-A- 2 553 711
- GB-A- 849 670
- US-A- 5 288 450
- DATABASE WPI Section Ch, Week 8851 Derwent Publications Ltd., London, GB; Class A85, AN 88-363778 & JP-A-63 272 536 ( KANEBO KK) , 10 November 1988

## Description

The present invention relates to a process for the annealing of formed objects made out of polycarbonate resin to reduce the internal stresses by subjecting the formed objects to a heat treatment.

It is known to reduce the internal stresses of objects made out of thermoplastic materials by means of a heat treatment. In DE-A-1 479 157 has been described a method for reducing the sensitivity to stress corrosion of objects made out of polycarbonate. In this known method the surface of the objects is treated for about 45 seconds to a temperature of at least 300 ° C. The heating can take place by means of heated liquids or gases; liquid hydrocarbons and low melting metals or metal alloys are proposed as liquid medium.

Prior to the treatment at 300° C, the objects can be treated at 70° to 120° C, for example in water of 87° C.

EP-A-0 145 864 describes the annealing of objects made out of thermoplastic materials such as polycarbonates by infrared heating. The formed objects are heated in this known method for about 30-120 seconds to a temperature which is 10-20% below the Vicat softening temperature of the thermoplastic material.

DE-A-3905412 describes a heat treatment of objects out of polycarbonate for 30 minutes to three hours at 100-180° C in a medium which has not been described.

The invention is based on the discovery that a simple treatment with hot water is sufficient to anneal formed objects made out of polycarbonate materials.

The claimed process consists of immersing the objects for a period of one to twenty minutes in water at a temperature of 70-100° C.

It is in particular surprising that it is possible to use a hot water treatment for objects made out of polycarbonate since polycarbonates are sensitive upon long term exposure to hot water. It proved to be possible to anneal objects made out of polycarbonate materials with hot water without degradation of the polycarbonate since a relative short period is sufficient to anneal the objects.

More surprisingly it has been found that specific types of polycarbonate i.e. polycarbonates derived from one or more dihydric phenols, and one or more aliphatic dicarboxylic acids and which comprise carboxylate bonds, can more easily be annealed by hot water than standard polycarbonates which do not comprise units derived from aliphatic diols.

The objects which are annealed with the process of the invention can be made out of all kind of polycarbonates. By the processing of polycarbonates into formed objects it is almost unavoidable that residual stresses are built into the formed objects. Such stresses often result in failure ( due to crack formation) when the formed objects are exposed to stress and chemically aggressive media. This phenomena is known as stress corrosion. It is known as explained above that the sensitivity to stress corrosion can be diminished by annealing the formed objects.

The process of the invention is directed to the annealing of objects formed from polycarbonates. Polycarbonates are generally known thermoplastic materials. The generally known polycarbonates comprise units derived from one or more aromatic diphenols and carbonate linkages. The above cited patent applications give examples of suitable polycarbonates.

It has been found that the process of the invention is particularly suitable for a special class of polycarbonate such as described in US-A-5,321,114, US-A-5,025,081 and US-A-4,983,706. Said polycarbonates comprise units derived from one or more aromatic diphenols, one or more aliphatic dicarboxylic acids and comprise carbonate linkages.

In the process according to the invention the formed objects are treated with hot water; a suitable temperature of the hot water is 70-100^{°} C. It is also possible to treat the objects with high pressure or low pressure steam. In the simplest embodiment of the invention the formed objects are simply immersed in a hot water bath. Surprisingly relatively short periods of one to twenty minutes in a water bath of 90-100^{°} C give a strong reduction in the sensitivity for stress corrosion.

### Examples

In the examples small standard tensile bar specimen (ISO 3167 MPTS type A) were annealed and subsequently tested to determine their sensitivity for stress corrosion. The rods were obtained by injection molding of two different polycarbonates (polycarbonate A and polycarbonate B). Polycarbonate A is a standard polycarbonate mainly consisting of units derived from bisphenol A and carbonate linkages. The intrinsic viscosity of Polycarbonate A (as measured at 25^{°}C in methylene chloride) was 47ml/g. Polycarbonate B is a special polycarbonate mainly consisting of units derived from bisphenol A, from dodecanedioic acid (about 9% by weight) and carbonate linkages. The intrinsic viscosity of Polycarbonate B is also 47ml/g. The tensile bars were molded under standard molding conditions.

Before the annealing the tensile bars were clamped in a strain jig and were bent in the jig under a strain of 0.7%. This was done to simulate stresses as may occur in complicated molded parts. While under stress the tensile bars were annealed.

Two different annealing treatments were used: immersion in boiling water for different periods and treating with hot air in an oven (120°C).

After the annealing treatment the sensitivity of the annealed rods was determined as follows. The bars were left in the strain jig. The jigs with the strained bars were immersed in a bath of a 1:3 mixture of toluene and n-propanol.

The occurrence of cracks means that no effective annealing took place. If no cracks were observed an effective annealing can be assumed.

The results are summarized in the following Table:

**TABLE 1**

| Annealing medium Annealing time | Polycarbonate A | Polycarbonate B |
|---|---|---|
| 0 min | cracks | cracks |
| **Hot water, 3 min** | **cracks** | no cracks |
| Hot water, 5 min | no cracks | no cracks |
| Hot water, 10 min | no cracks | no cracks |
| Hot water, 30 min | no cracks | no cracks |
| **Hot air, 3 min** | **cracks** | **cracks** |
| Hot air, 5 min | cracks | cracks |
| Hot air, 10 min | cracks | cracks |
| Hot air, 30 min | no cracks | no cracks |

As can be seen from the results it is possible to anneal formed objects much quicker in hot water than in hot air of a slightly higher temperature. It is further surprising that an effective annealing occurs at relative low temperatures (100^{°} C) in a relative short period. It is further remarkable that this method works very effective for special polycarbonate B. With the process of the invention it has become possible to anneal formed objects out of thermoplastic materials in a very simple, economical and environmentally friendly way.

It should further be remarked that the objects used in the examples even though made out of polycarbonate, which is sensitive to hot water, did not show any sign of degradation after the annealing step.

All the patent publications mentioned hereinbefore are deemed to be incorporated in the present specification by reference.

## Claims

1. Process for the annealing of formed objects made out of polcyarbonate resin, consisting of immersing the objects for a period of one to twenty minutes in water at a temperature of 70-100°C.

2. Process according to claim 1, wherein the objects have been made out of a polycarbonate which comprises units derived from one or more aromatic diphenols, one or more aliphatic dicarboxylic acids and which comprises carbonate linkages.

## Patentansprüche

1. Verfahren zum Tempern von aus Polycarbonatharz hergestellten Gegenständen, bestehend aus dem Eintauchen der Gegenstände für eine Dauer von ein bis zwanzig Minuten in Wasser bei einer Temperatur von 70-100°C.

2. Verfahren nach Anpruch 1, worin die Gegenstände aus einem Polycarbonat hergestellt sind, das Einheiten umfasst, die von einem oder mehreren aromatischen Diphenolen, einer oder mehreren aliphatischen Dicarbonsäuren abgeleitet sind, und die Carbonat-Bindungen umfassen.

## Revendications

1. Procédé pour recuire des objets façonnés en résine de polycarbonate, qui consiste à immerger les objets pendant une période d'une à vingt minutes dans de l'eau à une température de 70 à 100 °C.

2. Procédé selon la revendication 1, dans lequel les objets sont en un polycarbonate qui comprend des motifs issus d'un ou plusieurs diphénols aromatiques et des motifs issus d'un ou plusieurs acides aliphatiques dicarboxyliques, et qui comprend des liaisons carbonates.
